# EUROPEAN PATENT APPLICATION

(11) **EP 3 913 423 A1**
(43) Date of publication of application: **24.11.2021**
(21) Application number: 20175514.7
(22) Date of filing: 19.05.2020
(51) Int. Cl.: G02C 9/00, G02C 5/04

(54) **ADJUSTABLE LENS HOLDER FOR PROTECTIVE EYEWEAR**

(71) Applicant: Carl Zeiss Vision International GmbH, 73430 Aalen (DE)
(72) Inventor: Speroni, Pietro Ettore, 21052 Busto Arsizio (IT); Malnati, Sabrina, 21040 Lozza (VA) (IT); Rama, Edoardo, 13895 Graglia (BI) (IT); Vulcano, Antonio, 20021 Bollate (MI) (IT)
(74) Representative: Carl Zeiss AG - Patentabteilung

(57) **Abstract**

The invention relates to a protective eyewear comprising lens holder or the lens holder itself. The lens holder of the invention is for holding at least one ophthalmic or prescription lens inside a protective eyewear and is adjustable in various directions. In particular, the lens holder is adjustable in terms of at least one of positions selected from the group consisting of (i) horizontal length, (ii) vertical height, (iii) pantoscopic angle and (iv) wrap angle. The lens holder provides a stable and suitable fit of at least one ophthalmic or prescription lens to the wearer of a protective eyewear.

## Description

On many occasions, people who wear prescription (Rx) eyeglasses are required to wear additional protective eyewear or eyewear device, in particular protective spectacles or goggles. People working under unsafe environments are generally recommended to wear protective eyewear such as safety goggles or safety glasses to protect their eyes during work. Further, in sport activies where physical danger to the head of the user is inherent, such as skiing or snowboarding, a protective spectacle, e.g., ski goggles, should be worn. Another example would be an augmented reality (AU) or virtual reality (VR) devices which are worn on the eyes of participants.

In this regard, those people who wear ophthalmic or prescription (Rx) eyeglasses daily require special care in wearing such special spectacles since their vision correction should be maintained during optimum eye protection or services being provided.

In the field of personal protective equipment (PPE), there are limited products with the capability which fulfils at the same time of being a protective eyewear and allowing a correct fit of ophthalmic or prescription (Rx) lenses. Most of the products in the market are simple masks or goggles and the wearer has no other choice but wearing its prescription eyeglasses under the protective eyewear. This double device configuration brings to the user a great discomfort coming from the extra-fit of the protective eyewear on the head (needed for safety purpose) and the contemporary presence of prescription eyeglasses temples and frame.

Many inconveniences like continuous adjustment of the devices position, loss of focus in critical situations and incorrect/discontinuous field of view may occur to the wearers. Furthermore, the incorrect fitting of the two devices can potentially deliver a relevant risk for the wearer wearing the protective eyewear designed to protect the wearer from dust/water droplets and other fine agents. As a matter of fact, due to the difficult coexistence of the two components (protective eyewear and prescription eyeglasses) the protective eyewear may lose its fit to the wearer's head and open empty space where the said described agents may enter. In other words, the protective eyewear will not be able to perform its intended function, thereby delivering serious risks to the wearer.

Various attempts have been made to solve these problems. One approach is to provide a protective measure attachable to prescription eyeglasses with corrective power. GB 335,345 suggests that an auxiliary optical lens can be moved into or out by lying it in over one half of the main optical element. GB 1,237,289 also describes a shield attached at the end of correction spectacles. However, they fail to provide any adjustment of positioning of the lens and sufficient protection of the eye. A way of directly inserting the ophthalmic or prescription lenses with corrective power into the frame of protective eyewear as a lens of the protective eyewear has been also considered. However, if the lens of the thus-made protective eyewear is damaged, a whole new product should be manufactured again, which will incur high cost and cumbersomeness.

Other attempt is to insert the prescription lenses with a frame inside the protective eyewear which is big enough to cover the frame. However, this cannot reflect every user needs regarding positioning of the lenses. For example, prescription lenses with fixed shape clip has been found in the winter sport market, but this kind of product still has significant flaws of being not adjustable and not universal as it is dedicated to one fixed product shape, i.e., one product type which cannot reflect the individual visual characteristics. Further, US 48100480 describes a protective spectacle with nosepieces which enable prescription lenses with corrective power to be mounted on the outer protective spectacle. While it discloses nosepieces of various sizes to achieve a comfortable fit, no delicate adjustment of vertical height can be provided.

According to the invention, the above problems can be solved by a protective eyewear device comprising a lens holder designed for ophthalmic or prescription lenses, which can be inserted into and connected to the protective eyewear device and enables adjustment of positions and angles of the ophthalmic or prescription lenses.

According to the invention, the lens holder is adjustable in terms of at least one of positions selected from the group consisting of (i) horizontal length, (ii) vertical height, (iii) pantoscopic angle and (iv) wrap angle.

The term "protective eyewear" used in the present invention is an eyewear for safety having lens(es) which provides protection of the eyes from impact, dust, chips, flying particles, pathogens, virus, and chemical splash, etc. Protective eyewear is known in many forms. Sport goggles or masks for skiing, snowboarding, motor cross, and safety glasses, safety goggles, face shields, masks or helmets for factories having a possibility of being exposed to pathogens, chemicals, heat, etc., pharmacies, laboratories, clinics and cleanrooms, etc. can be an example. In a preferred embodiment, protective eyewear indicates a goggle or a mask. In a more preferred embodiment, protective eyewear indicated a ski goggle or safety goggle.

The term "prescription (Rx) lens(es)" refers to a corrective lens with corrective dioptric powers which is typically worn in front of the eye to improve vision.

The term "ophthalmic lens(es)" refers to lens intended to be used for purposes of measurement, correction and/or protection of the eye, or for changing its appearance.

The term "pantoscopic angle (tilt)" indicates as defined in ISO 13666:2019, which is vertical angle between the horizontal and the perpendicular to a reference line passing through the apex of the grooves of the upper and lower rims of the frame in the vertical plane containing the primary direction.

The term "wrap angle" indicates as defined in ISO 13666:2019, which is horizontal angle between the primary direction and the perpendicular to a reference line passing through the apex of the grooves of the nasal and temporal rims of the frame in the horizontal plane containing the primary direction.

The protective eyewear according to the present invention can be any form where the lens holder of the present invention can be attached. The protective eyewear according to the invention may comprise a frame and a lens which is supported by the frame. The protective eyewear according to the invention may have a frame pad which is connected to the frame and which is brought to rest on the wearer's face during normal use. In a preferred embodiment, the protective eyewear of the invention has a fastening part which can be connected to a lens holder. In a more preferred embodiment, the protective eyewear can be in a form of goggles or masks, more preferably safety or ski goggles. In a case where the protective eyewear is a goggle, it may further comprise a retaining strap. The retaining strap is generally composed of a length-adjustable textile or rubber strap. The retaining strap is mostly fastened to the frame. However, it can also be fastened to the goggle lens.

Within the context of the present invention, frame of protective eyewear is understood as meaning those parts which serve as a support for the lens. The frame generally completely surrounds the outer edge of the lens. The frame is generally curved concavely in a manner adapted to the curvature of the wearer's face. Preferably, in a case where the protective eyewear is glasses or goggles, the bottom of the frame may be designed to conform to the shape of the nose of the wearer and has outer surfaces adapted to snugly engage the nose bridge portion of glasses or goggles.

Within the context of the present invention, lens of a protective eyewear is understood as the transparent body through which the wearer looks during normal use and which determines the field of view of said wearer. It is generally made in one piece and is provided for both eyes to look through.

Within the context of the present invention, frame pad defines a peripheral contact surface and is connected to the frame over the perimeter of frame reverse directed toward the wearer's face during normal use. The frame pad is configured to be seated on the face of the wearer during normal use so as to cause peripheral contact surface to be in contact engagement with the face of the wearer. The frame pad is generally adapt to the contour of the wearer's face.

The present invention relates to protective eyewear which comprises a frame and/or a frame pad, a goggle lens supported by the frame, and a lens holder which is adjustable in various position.

According to the invention, the lens holder is adjustable in terms of at least one of positions selected from the group consisting of (i) horizontal length, (ii) vertical height, (iii) pantoscopic angle and (iv) wrap angle. These positions are adjustable independently or together. Preferably, the lens holder is adjustable in terms of at least two of the positions selected from the group consisting of (i) horizontal length, (ii) vertical height, (iii) pantoscopic angle and (iv) wrap angle. In one embodiment, the lens holder is adjustable in terms of horizontal length, vertical height, and/or wrap angle. In another embodiment, the lens holder is adjustable in terms of horizontal length and/or vertical height.

The protective eyewear of the present invention ensures that ophthalmic or prescription lenses can be freely and easily introduced inside by using a lens holder which holds ophthalmic or prescription lenses in addition to the lens(es) of the protective eyewear.

The lens holder of the present invention enables the ophthalmic or prescription lenses to be mounted directly inside a protective eyewear while delicately adjusting the various positions of the ophthalmic or prescription lens including (i) horizontal length, (ii) vertical height, (iii) pantoscopic angle, and/or (iv) wrap angle according to the visual characteristic of the wearer.

The lens holder of the invention comprises two lens-shaped frames comprising a protrusion, a lower support which can be connected to an upper support and a nose part holder and has a sliding mechanical link, the nose part holder to connect the two lens-shaped frames and the lower support, and the upper support which can be connected to the lower support.

Here, the lens-shaped frames are connected to the nose part holder by means of the protrusions. The lower support is connected to the nose part holder by means of the sliding mechanical link of the lower support. The protrusions, lens-shaped frames and/or the sliding mechanical link are constructed to enable adjustment of positions and angles of ophthalmic or prescription lens.

The lens-shaped frames are connected to the nose part holder by means of the protrusions and can adjusts the horizontal length, pantoscopic angle, and/or wrap angle of ophthalmic or prescription lenses inserted in the lens-shaped frames by controlling the attached position, conjunction angle, way of conjunction, etc. The lower support passes through the nose part holder by means of the sliding mechanical link thereby adjusting the vertical height together.

In lens-shaped frames, at least one ophthalmic or prescription lens, preferably left and right ophthalmic or prescription lenses, with visual characteristcs of the individual wearer are inserted to provide the corrected vision to the wearer. Each lens-shaped frame has a protrusion which is protruded from the nose side of the frames. The protrusions of the lens-shaped frames can be integrally attached to the lens-shaped frames. The shape of the frames could be selected according to the taste or needs of the individual wearer.

Together with a nose part holder which will be described below, the lens-shaped frames and the protrusions thereof enable the lens holder according to the present invention to easily adjust the horizontal length between the ophthalmic or prescription lenses for the left and right eyes. This is crucial in particular, in order to adjust the horizontal length according to the interpupillary distance (PD) as defined in 5.29 of DIN EN ISO 13666:2013-10, which is the distance between the centers of the pupils when the eyes are fixating an object at an infinite distance in the straight-ahead position, may be needed both for customizing spectacle frames and in some instances also for adapting the spectacle lenses themselves to a particular person. Unlike the conventional measures, by being able to adjust the horizontal length between the left and right ophthalmic or prescription lenses, the present spectacle provides more clear vision to the wearer.

The upper support can be connected to an upper portion of a frame or a frame pad of a protective eyewear, preferably around the center of an upper portion of a frame or a frame pad of a protective eyewear. The upper support can be connected to an upper portion of a frame or a frame pad by using adhesive agent, molding, or a fastening part, etc. In a preferred embodiment, fastening parts are used to connect these two parts. In a preferred embodiment, the upper support and the upper part of the protective eyewear comprise a pair of fastening parts which can be any latch or latch opening, lug and lug opening, clip portion and bridge portion, screw and screw hole, etc. which are able to fasten the lens holder together with the goggle frame or frame pad. The fastening part of the protective eyewear can be a lug openings which can be engaged with a lug, or horizontally extending U-shaped latch which can be engaged with a pin or button shaped plastic. For example, by engaging the U-shaped lug horizontally protruded from the upper support with a plastic pin or button horizontally protruded from a frame or a frame pad of a protective eyewear, the upper support can be stably fixed to the protective eyewear. The fastening part can be elongated and be in a integral form with the frame or frame pad of the protective eyewear and the upper support of the lens holder. The lens holder according to the invention can be releasbly attached the protective eyewear by means of fastening part.

The upper support is preferably T-shaped and hollow. A lower support, which will be described below, is inserted into the downwardly pointing upper support portion so that they can be fixed and locked together. Preferably, this can be assisted by an upper protrusion in the lower support.

The lower support provides further adjustment of ophthalmic or prescription lenses in the lens-shaped frames. In one embodiment, the lower support adjusts vertical height of the lens-shaped frame having ophthalmic or prescription lenses.

The lower support has a sliding mechanical link which can provide further adjustment of ophthalmic or prescription lenses in addition to the lens-shaped frames and protrusions thereof. In one embodiment, the sliding mechanical link adjusts vertical height of ophthalmic or prescription lenses. A sliding mechanical link can be in any form as long as it can adjust and fix the vertical height. In a preferred embodiment, the sliding mechncial link comprises integrated racks. In such a case, integrated racks are also formed on the inner wall of the upwardly pointing portion of the nose part holder, to enable vertical height adjustment and locking of these two elements.

This readily allows an optician to adjust the vertical height of the ophthalmic or prescription lenses in view of the visiual characteristics of the wearer. Once the nose part holder is dragged or dropped to a certain position of integrated racks to adjust the vertical height, the integrated racks engaged with each other do not move due to the grid shapes of racks gripping with one another. The length of each rack is about 1 to 10 milimeters, preferably 1 to 5 milimeters, most preferably 1 milimeter. The short length of each integrated rack may provide delicate adjustment of vertical height.

Further, the bottom portion of the lower support is connected to a lower portion of a frame or frame pad of a protective eyewear. The lower support can be attached around the middle of a lower portion of a frame or a frame pad of a protective eyewear so that the lower support can be fixed to the protective eyewear. The shape of the bottom portion of the lower support may vary according to the shape of the central part of the lower portion of a frame or a frame pad to which the bottom portion of the lower support is attached. If a bottom portion of the lower support is placed on a part of a frame or a frame pad of a protective eyewear, in particular goggles, with a nose curves in an arc shape, it is preferable for the bottom portion of the lower support to also have a complementary confirguration. Accordingly, the bottom portion of the lower support is preferably designed as curving laterally upward in arc shape. If a lower portion of a frame or frame pad of a protective eyewear is in a form of 2-tiered layers, the bottom portion of the lower support may comprise two lips which also have 2-tiered heights which are complementray configuration to the frame or frame pad. For instance, the bottom portion of the lower support in an arc shape may comprise a front lip and a rear lip that is fit into the arc-shaped part of frame or frame pad with 2-tiered layers, which is mounted on the nose of wearer.

In one embodiment, to provide more firm fixation, if a frame pad of a protective eyewear is made of elastic material, it can be teared such that small holes enough to insert the bottom portion of the lower support can be formed. Here, the bottom portion is inserted into goggle and provide stable fixation. To provide even more stable fixation of the lens holder to the lower portion of the protective eyewear, both ends of the bottom portion may be designed to have a more bent shape to be more perfect fit to the shape of the goggle, thereby providing more rigid fixation of the lens holder.

Lastly, a lower support may comprise an upper protrusion at the top of the upwardly pointing portion so that it can be more stably fixed to the upper support. This upper protrusion enables more stable fixing of the lower support to the upper support.

The nose part holder is connected to the lens-shaped frames, lower support and upper support and plays a key role in the adjustment of the lens holder. It is connected to the pair of lens-shaped frames by means of the protrusions thereof and is connected to the lower support by means of the sliding mechanical link thereof.

The protrusions of the lens-shaped frames can be in any form as long as it can provide adjustment of the horizontal length or angle between the two lens-shaped frames and fixing of the lens-shaped frames to the nose part holder. In a preferred embodiment, the protrusions of the present invention have grooved joints or integrated racks, which are operable to allow an optician to easily adjust the horizontal length between the ophthalmic or prescription lenses (for the left and right eyes of the wearer) by properly engaging the protrusions with the nose part holder. The portion of the nose part holder engaging with the protrusions of the lens-shaped frames may have corresponding grooved joints or integrated racks for length adjustment and fixing. For example, the longer the grooved joints of the protrusions and the nose part holder are engaged with each other, the shorter becomes the interpupillary distance of the wearer. On the other hand, the shorter the grooved joints are engaged, the longer becomes the interpupillary distance of the wearer.

According to the lens holder of the present invention, adjustment of the pantoscopic angle and/or wrap angle can be achieved as well. In one embodiment, the lens-shaped frames are horizontally attached to the protrusions thereof and the grooved joints or integrated racks of the horizontally lying part of the nose part holder are configured to provide a proper angle. The grooved joints or integrated racks of the horizontally lying part of the nose part holder are configured so that only some of them are perfectly aligned with the grooved joints or integrated racks of the protrusion of the lens-shaped frame and the others are in contact with the grooved joints or integrated racks of the protrusion of the lens-shaped frame only in part or only at the edge. In this way, the lens-shaped frames with ophthalmic or prescription lenses can be disposed in a certain angle which corresponds to pantoscopic angle and/or wrap angle of the wearer. In another embodiment, the lens-shaped frames are attached to the protrusions with an angle leaning forward or backward to the lens of protective eyewear thereby adjusting the pantoscopic angle to meet the individual need of the wearer. If both lens-shaped frames are attached to the protrusion with an angle leaning to the face of the wearer as well as to the nose part holder, wrap angle can be adjusted. By being able to adjust the pantoscopic and/or wrap angle, the lens holder can be accommodated to any complex optical designs (such as progressive designs), optimize the werear experience and provide comfort even during a long period of wearing the lenses.

Once the lens-shaped frames and the nose part holder are fixed to provide a certain horizontal length, pantoscopic angle, and/or wrap angle, they do not move due to the grid shapes of racks gripping one another. The length of each grooved joint and/or integrated rack is about 1 to 10 milimeters, preferably 1 to 5 milimeters, most preferably 1 milimeter. The short length of the integrated racks provides delicate adjustment of horizontal length.

The sliding mechanical link of the lower support can pass through the vertical hole of the nose part holder and subsequently is inserted into the vertical hole of the upper support and is locked by means of a protrusion of the lower support, thereby fixing the lower support to the upper support while passing through the nose part holder. After the lower support is fixed to the upper support while passing through the nose part holder, by pulling the nose part holder up or down, the vertical height of ophthalmic or prescription lenses can be adjusted to find the most suitable view angle or position of the respective wearer with the aid of the sliding mechanical link.

In a preferred embodiment, the nose part holder is reverse-T shaped. The nose part holder is configured to have walls between the upwardly pointing portion and the lying portion so that the protrusions of the lens-shaped frames and the sliding mechanical link of the lower support do no meet with each other.

The use of sliding mechanical links ensures efficient and easy adjustment, simply by pulling or pushing the nose part holder.

In one preferred embodiment, the sliding mechanical link comprises integrated racks. Integrated racks allow the vertical height of the presecription lenses to be adjusted by pulling up or pushing down the nose part holder wherein the lens-shaped frames with the ophthalmic or prescription lenses are attached thereto with a horizontal length, wrap angle, and/or pantoscopic angle which has been already adjusted in view of the wearer needs. In a case where the sliding mechanical link comprises integrated racks, integrated racks are also formed on the inner wall of the upwardly pointing portion of the nose part holder, and thus these two group of integrated racks can be interlocked with each other. They are automatically locked when a rack on the sliding mechanical link and a rack inside the nose part holder are clamped to each other by physical pressure at a proper position so that it can provide suitable view direction and angle for the wearer.

The object of the present invention is achieved in full by the above-described embodiments of protective spectacles comprising lens holder.

Unlike the prior art, the lens holder according to the present invention as a whole will be mounted directly inside the protective eyewear and enables the ophthalmic or prescription lenses to be fixed in a certain position with a certain angle which provides the most suitable point of view for the individual wearer.

After at least one of the positions selected from the group consisting of (i) horizontal length, (ii) vertical height, (iii) pantoscopic angle and (iv) wrap angle are initially set up in view of the individual needs, no further adjustment of the view of the wearer is required. While providing easy adjustment, the nose portion of the lens holder enables the lens holder to be fixed at a desired position and prevents from moving horizontally or vertically afterwards. As explained above, in one embodiment, the adjustment in all positions and angles can be obtained by properly designing the nose part holder.

The problems of the prior art which require continuous adjustment of the device position and thus lead to loss of focus or incorrect and discontinuous field of view in critical or dangerous situations is completely solved.

Furthermore, the present invention provides a protective eyewear with perfect fitting and corrected view without any delocation by exhibiting excellent stability thereby eliminating a risk of failing to perform its intended function, e.g., protecting the wearer from dust or water droplets or other fine agents.

Further, with the lens holder of the present invention, the protective eyewear requires no contact points neither with frame nor temples of the ophthalmic or prescription lenses. The lens holder also does not have contact with the wearer. Therefore, the protective spectacle can accomplish its original function at 100% without being interrupted.

Moreover, the problem of the prior art which fails to meet the individual needs with regard to the positioning of ophthalmic or prescriptions lenses is completely solved by the adjustments in terms of position and angle provided by the present invention. The protective eyewear with the lens holder of the present invention enables adjustment of ophthalmic or prescription lenses in terms of various positions, in particular, (i) horizontal length, (ii) vertical height, (iii) pantoscopic angle and/or (iv) wrap angle, which is a remarkable effect that was not able to be provided by any other prior art before. The possibility to adjust the position of the lens set on both axises and various angles furthermore brings a benefit to the wearer who will be allowed to setup its most suitable view angle and position. With the above feature, the lens holder is capable of being accommodated to any complex optical designs (such as progressive designs), optimizes the werear experience and provides comfort even during a long period of wearing the lenses.

The present invention further relates to a lens holder which provides adjustment of ophthalmic or prescription lenses as described above.

The present invention is directed to a lens holder for holding at least one ophthalmic or prescription lens inside a protective eyewear comprising a pair of lens-shaped frames characterized in that the lens holder is adjustable in terms of at least one of positions selected from the group consisting of (i) horizontal length, (ii) vertical height, (iii) pantoscopic angle and (iv) wrap angle. These positions are adjustable independently or together. The lens holder according to the invention can be releasbly attached the protective eyewear.

The lens holder of the present invention can be provided in a form of assembly kit to which the visual needs of the individual wearer is reflected. One may easily assemble the kit to any protective eyewear, preferably the protective eyewear of the invention. The assembly kit of the lens holder can be easily assembled and (i) horizontal length, (ii) vertical height, (iii) pantoscopic angle and/or (iv) wrap angle of ophthalmic or prescription lenses inserted to the lens-shaped frame of the lens holder can be adjusted as needed during or after the assembly. This can be easily done compared to the prior art which requires complicated process or robust elements to be inserted. Further, by providing adjustment in multiple directions and angles, the present invention provides a remarkable effect that was not previously possible.

The parts of the lens holder can be designed and produced according to individual needs of the wearer. The lens holder can be custom made in consideration of the visual needs of the wearer. The parts of the lens holder can be produced using any conventional manufacturing method including molding, 3D-printing, etc.

In one embodiment, the lens holder of the present invention is assembled according to the following steps:
(a) ophthalmic or prescription lenses for left and eyes of a wearer are put on lens-shaped frames;
(b) each lens-shaped frame with ophthalmic or prescription lens is connected to lying portion of a nose part holder by means of protrusions which are protruded out from the nose part of the lens-shaped frame while adjusting the horizontal length between and/or pantoscopic angle and/or wrap angle of the ophthalmic or prescription lenses;
(c) a lower support is inserted through upwardly pointing portion of a nose part holder by means of a sliding mechanical link;
(d) an upper end of the lower support is inserted into a downwardly pointing portion of an upper support and subsequently pressed;
(e) the lower support is fixed to a lower part of a frame or a frame pad of a protective eyewear by means of the bottom part;
(f) the upper support is fixed to the upper part of a frame or a frame pad of the protective eyewear by means of fastening parts; and
(g) the nose part holder is pulled up and pushed down to adjust the vertical height of the ophthalmic or prescription lenses.

It is desired if the length of the protrusions of the above lens-shaped frames are 40 mm to 200 mm. If the distance above is chosen in the range of between 40 mm to 100mm, more preferably between 50 mm and 80 mm, the wearer can generally find a lens holder providing optimal horizontal length. It is desired if the length of the sliding mechanical link of the lower support is 3 to 30 cm. In an embodiment where the protective eyewear to be applied is a goggle, it is desired if the length of the sliding mechanical link of the lower support is 3 to 15 cm , preferably 4 to 12 cm more preferably 4 to 10 cm, most preferably 4 to 8 cm. These will provide a length flexible enough to fit most of the common vertical height.

The lens holder can, for example, be made at least in part from a flexible plastic. If can be made with a flexible plastic having a modulus of elasticity of between 2 N/mm² and 100 N/mm². Dimensional stability is ensured.

The invention is described in more detail below with reference to the drawing, in which:
Figure 1 shows an illustrative embodiment of protective goggle 100 with lens holder according to the invention in a three-dimensional perspective plan view from the front,
Figure 2 shows an illustrative embodiment of the back side of the protective goggle 100 with lens holder 106 according to the invention in a three-dimensional perspective plan view,
Figure 3 shows a detail of lens holder 106 in a plan view,
Figure 4a shows lens-shaped frame 106d and nose part holder 106c being connected together with vertically attached protrusions in a plan view,
Figure 4b shows an illustrative embodiment of lens-shaped frame 106d and nose part holder 106c being connected while the lens-shpaed frame being attached to protrusion 114a with a tilted angle in a plan view,
Figure 4c shows an illustrative embodiment of interlocking grooved joints of protrusions of lens-shaped frame 106d and nose part holder 106c,
Figures 5a and 5b shows an illustrative embodiment where a certain wrap angle is provided by means of adjusting the conjunction between the racks of the protrusions of the lens-shaped frames and the nose part holder,
Figure 6 shows an illustrative embodiment of a lens holder 106 wherein lower support 106b passes through nose part holder 106c by means of sliding mechanical part 112b in a plan view,
Figure 7a shows an illustrative embodiment showing how integrated racks of lower suppoer 106b can be engaged and fixed with upper support 106a and nose part holder 106c.
Figure 7b shows an illustrative embodiment of inner wall structure of nose part holder 106c,
Figure 8 shows an illustrative embodiment of lens holder 106 wherein lower support 106b passes through nose part holder 106c and then inserted into upper support 106a,
Figure 9 shows an illustrative embodiment of lens holder 106 being fixed to protective goggle 100 by means of bottom part 112c of lower support 106b, and
Figure 10 shows an illustrative embodiment of lens holder 106 being fastened to protective goggle 100 by means of fastening parts 115, 107.

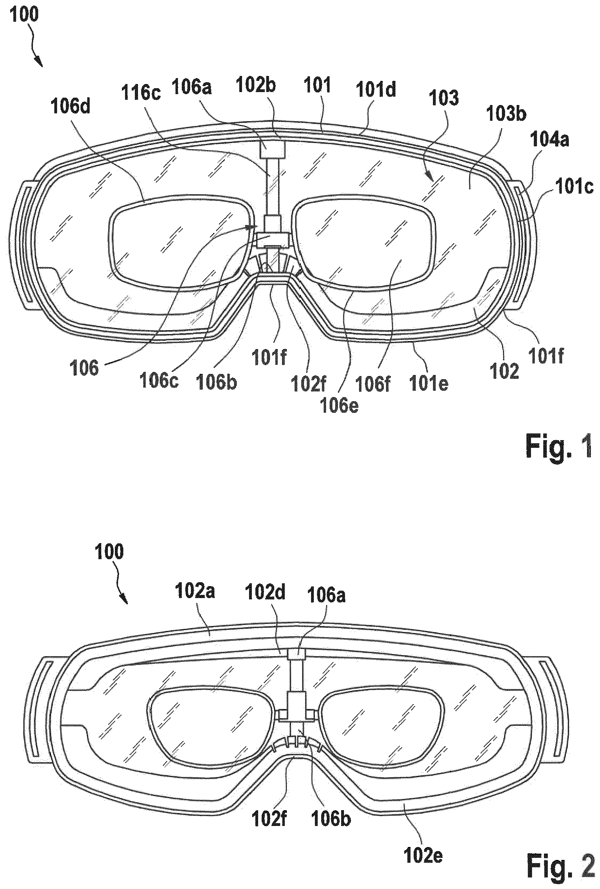

An illustruative embodiment of protective goggle 100 shown in Figures 1 has a frame 101, a frame pad 102, a goggle lens 103 in the form of a transparent plastic panel in the visible spectral range, and two sidepieces 104a, 104b for a retaining strap.

The goggle lens 103 is supported by the frame 101. The frame 101 is formed as a single piece. The frame 101 is configured in the form of an elongate surround. The frame 101 has a frame reverse 101a directed toward the wearer's face during normal use, a frame front 101b lying opposite the frame reverse 101a, and a frame edge 101c directed laterally outward with a gently convexly curved upper part 101d, and a lower part 101e, which forms an inwardly curving nose-piece 101f.

The goggle lens 103 supported by the frame 101 has a surface 103a directed toward the wearer's face during normal use, and a surface 103b directed away from the wearer's face during normal use.

The frame pad 102 is adhesively bonded to that side of the frame 101 directed toward the wearer's face 101a. The frame pad 102 is brought to rest on the wearer's face during normal use. The frame pad has a frame pad reverse 102a directed toward the wearer's face during normal use, a frame pad front 102b lying opposite the frame pad reverse 102a, and a frame pad edge 102c directed laterally outward with a gently convexly curved upper part 102d, referred to hereinbelow as the upper frame-edge portion, and a lower part 102e, which forms an inwardly curving nose-piece 102f.

Frame 101 and frame pad 102 have a concave curvature that respects the shape of the head.

The sidepieces 104a, 104b for the retaining strap, which holds the goggle 100 on the wearer's head during normal use, are fastened to the rearwardly pointing part 101f of the frame 101. The retaining strap can be composed of a textile fabric.

According to the preferred embodiment of the invention, the goggle 100 comprises a lens holder 106, which can be connected releasably thereto. In particular, the lens holder 106 is attached around the center of the lower part 102e and nose-piece part 102f of frame pad 102 via lower support 106c and around the center of the upper part 102d of frame pad 102 via upper support 106a as shown in Figure 2.

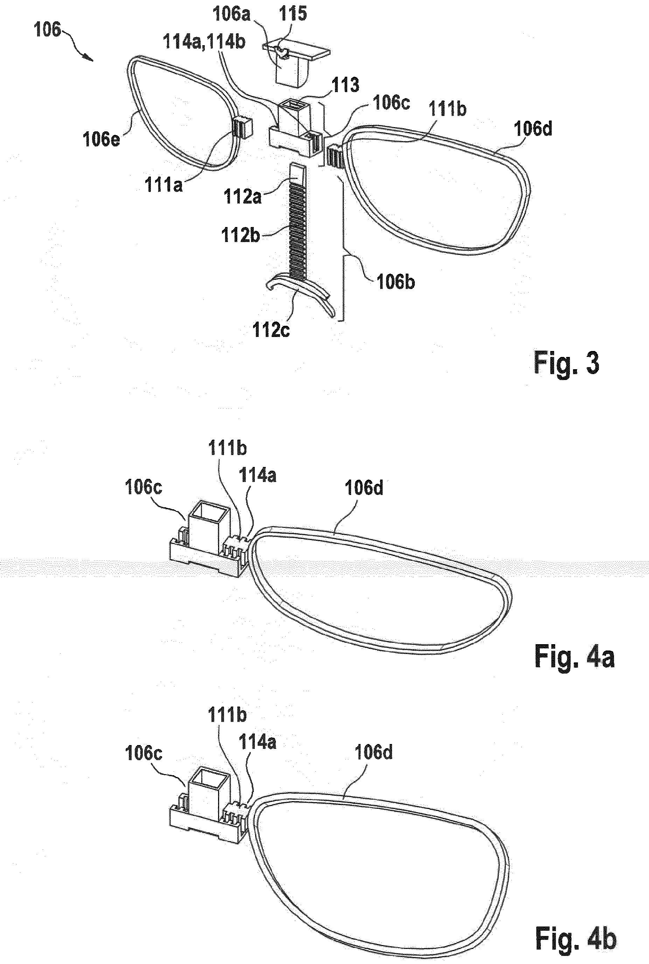

In Figure 3, a preferred embodiment of a lens holder is depicted. The illustrative embodiment lens holder 106 according to the present invention comprises a pair of lens-shaped frames 106d, 106e, a upper support 106a, a lower support 106b, and a nose part holder 106c. The lens-shaped frames 106d, 106e have protrusions 111a, 111b, respectively, which are integrally attached thereto. Ophthalmic or Prescription lenses of the wearer is inserted into the frames 106d, 106e. The upper support 106a is attached to a upper portion of a frame 101d or a frame pad 102d of a protective eyewear. The lower support 106b comprises a upper protrusion 112a which is in a form of right-angled triangle prism, a sliding mechanical link 112b and a bottom portion 112c, wherein the lower support 106b can be connected and fixed to a lower portion of a frame 101e or a frame pad 102e via the bottom portion 112c and can be connected and fixed to the upper support 106a via the upper protrusion 112a. The nose part holder 106c connects the pair of lens-shaped frames 106d, 106e, and passes all the way through the lower support 106b, and then the lower support 106b is connected to the upper support 106a. Here, the lens-shaped frames 106d, 106e are connected to the nose part holder 106c by means of the protrusions 111a, 111b in a form of grooved joints and the lower support 106b is interlocked with the nose part holder 106c by means of the sliding mechanical link 112b.

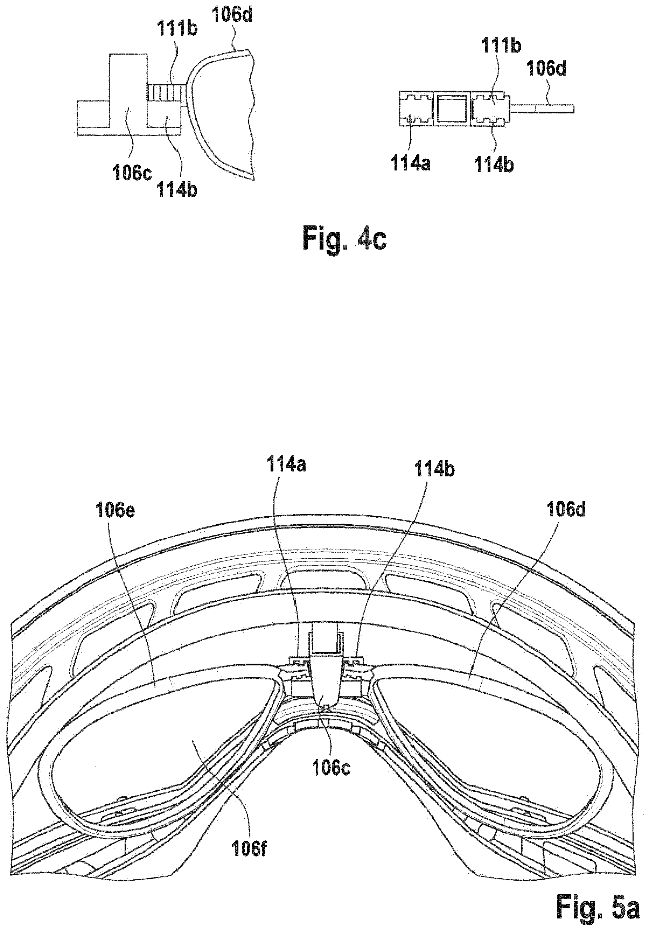

As shown in Figures 4a, 4b, and 4c, the protrusions 111a, 111b of the lens-shaped frames 106d, 106e are disposed and fixed onto the lying parts 114a, 114b of the nose part holder 106c. For this, the protrusions 111a, 111b and the lying part of the nose part holder 114a, 114b can have grooved joints which can fit to each other and enables the lens-shaped frames 106d, 106e to be fixed to the nose part holder 106c as shown in Figures 4a and 4c. By properly adjusting the length of the overlapping part between the protrusions 111a, 111b and lying parts 114a, 114b, the proper horizontal length can be obtained according to the needs of the wearer. Here, as shown in Figure 4b, the lens-shaped frame may be designed and produced to be connected to protrusion in a certain angle which corresponds to the pantoscopic angle of the wearer (or wrap angle if tilted to other direction as described above). If no pantoscopic angle is required, the lens-shaped frame can be configured to stand upright.

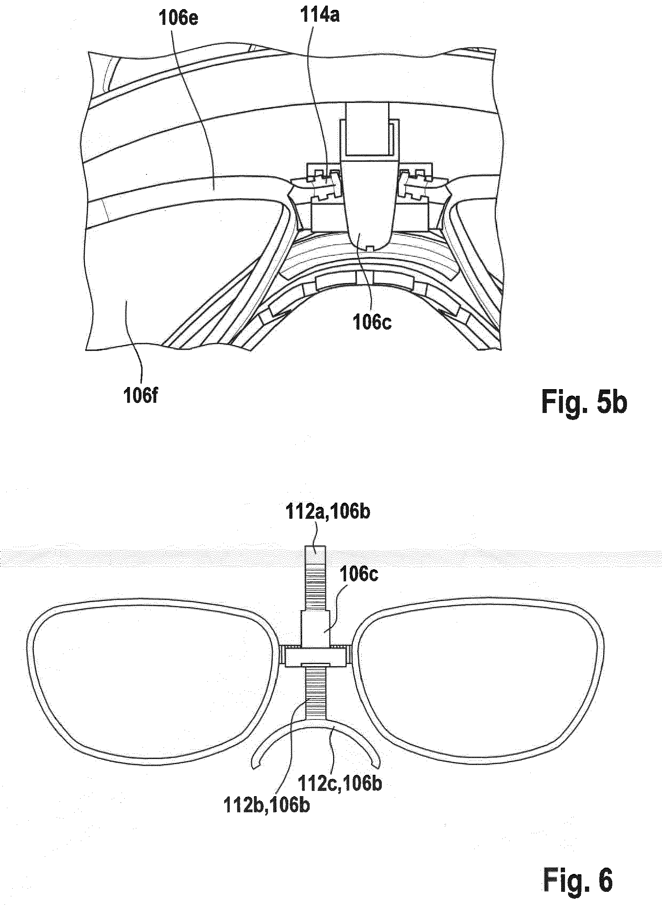

Wrap angle or pantoscopic angle can be adjusted by the way as shown in Figures 5a and 5b. In Figures 5a and 5b, wrap angle is adjusted. Integrated racks of the nose part holder 106c are configured so that the protrusions of the lens-frame holder 114a are aligned therewith with a certain angle providing a proper wrap angle to the user. Here, among the four integrated racks in the protrusion of the lens-shaped frame 114a, two of them in diagonal direction are perfectly aligned into the corresponding racks of the nose part holder 106c and the other two of them also in diagonal direction are partially in contact with the rack of the nose part holder 106c (at the edge of the rack of the nose part holder 106c) while providing fixation between them. This enables ophthalmic or prescription lenses inserted into the lens-shaped frames to be disposed in a certain angle leaning to the face of the wearer as well as to the center of the lens holder, thereby providing a proper wrap angle. This contributes to appropriate accommodation to complex optical designs (such as progressive designs), optimization of wearer experience and wearing comfort even for a long period of time.

As shown in Figure 6, the nose part holder 106c is in a T-shape. It has an upwardly pointing portion 113 and two lying portions 114a, 114b. The upwardly pointing portion 113 is hollow so that the sliding mechncial link 112b can be slided into. The horizontally lying portion is divided into two parts wherein the upwardly pointing portion 113 is disposed between the two separate lying portions 114a, 114b.

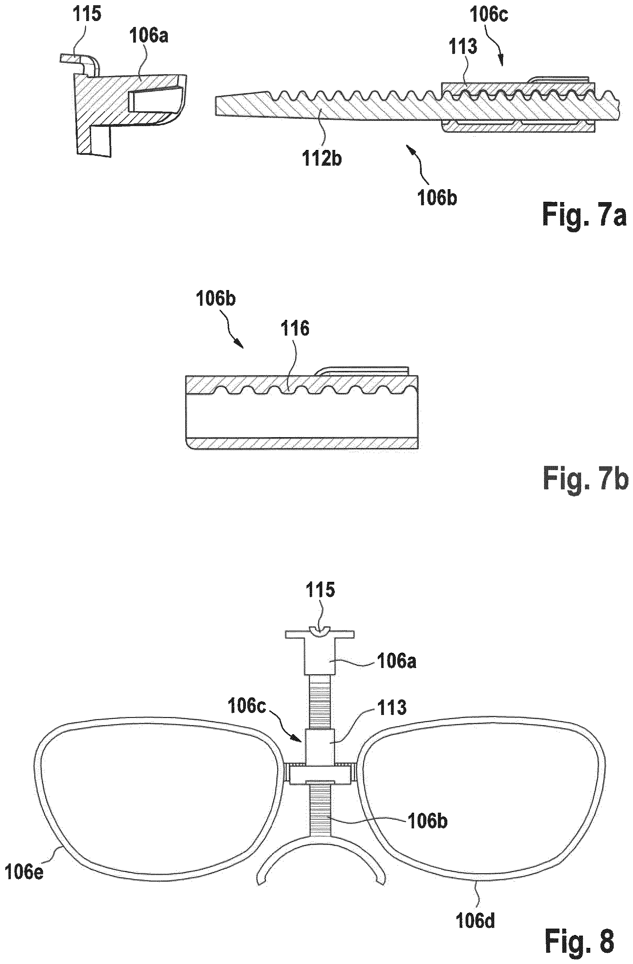

Figure 7 shows an embodiment where the sliding mechanical link 112b has integrated racks. The sliding mechanical link 112b passes all the way through the nose part holder 106c. With the integrated racks 112b, the vertical height can be easily and properly adjusted in accordance with the visiual characteristics of the wearer by pulling down or pushing up the nose part holder 106c interlocked therewith.

Here, as shown in Figures 7a and 7b, the upwardly pointing part 113 of nose part holder 106c, which is connected to the lens-shaped frames 106d, 106e, also has integrated racks 116 on its inner wall which faces integrated racks of sliding mechanical link 112b. This structure allows the nose part holder 106c to be interlocked with integrated racks of sliding mechanical link 112b. After adjusting the vertical height (when assembly of lens holder is done), these two elements can be fixed in a determined position with desired vertical height by pressing them together with proper force. They can be locked due to the grid shape of integrated racks gripping with one another. This fixing mechanism is based on a simple drag and drop operation and easy for opticians to perform.

As shown in Figure 8, after being assembled with (passing through) the nose part holder 106c, the lower support 106b is connected to the upper support 106a via upper protrusion 112a. The upper protrusion 112a is inserted and fixed into the hole or cavity of the upper portion 106a by pressure and is not separated thereafter unless one tries to pull out the lower support 106c from the upper support 106a. The upper support may have a U-shaped latch 115 to be used when fixed with a protective eyewear.

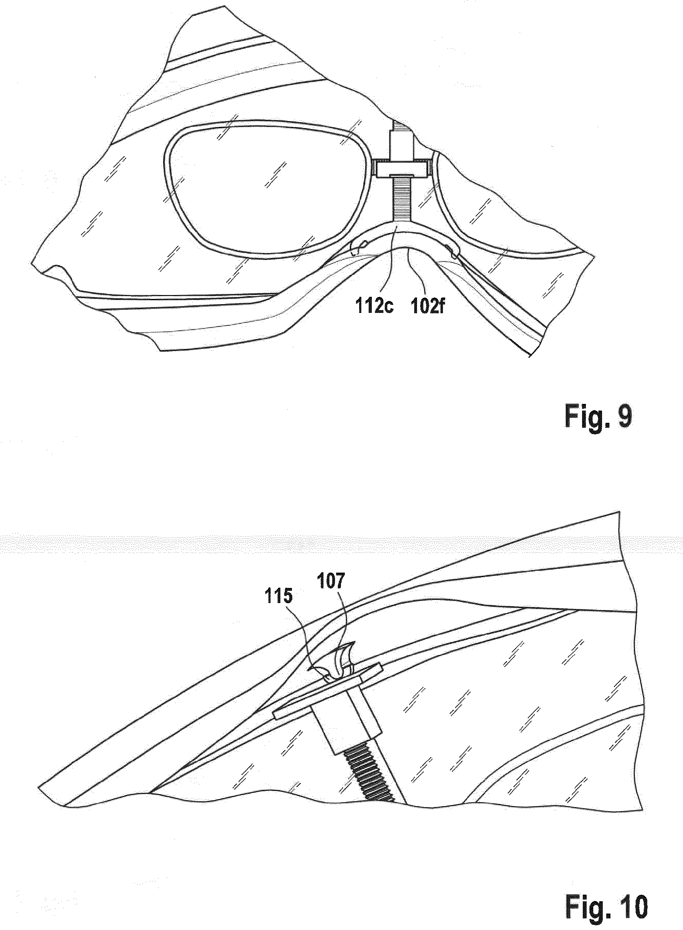

When assembly is completed, the lens holder 106 can be attached to lower part 101e, 101e or nose-piece part 101f, 102f of a frame or a frame pad of protective goggle 100 by means of bottom part 112c of the lower support 106c as shown in Figure 9. As the shape of the bottom part 112c is designed so that it matches and corresponds to that of the part of the frame or frame pad to be sit and fixed on, a stable fixation is provided between them. The bottom part 112c is in a reversed U-shape and is in a perfect match with the contacting frame pad part 102f of goggle 100 which sits on a nose.

Figure 10 shows an illustrative example showing how the upper portion 106a can be fixed to a protective eyewear. The U-shaped latch 115 of the upper support 106a can be fixed on to the pin shaped plastic 107 of a protective eyewear.

## Claims

1. Lens holder for holding at least one ophthalmic or prescription lens inside a protective eyewear comprising a pair of lens-shaped frames **characterized in that** the lens holder is adjustable in terms of at least one of positions selected from the group consisting of (i) horizontal length, (ii) vertical height, (iii) pantoscopic angle and (iv) wrap angle.

2. Lens holder according to Claim 1, **characterized in that** the positions are adjustable independently from one another or together.

3. Lens holder according to the preceding claims, **characterized in that** the lens holder is releasbly attached the protective eyewear.

4. Lens holder according to any one of the preceding claims, **characterized in that** the lens holder comprises two lens-shaped frames comprising protrusions,
a lower support which can be connected to an upper support which has a sliding mechanical link,
a nose part holder to connect two lens-shaped frames and the lower support, and
the upper support which can be connected to the lower support,
wherein the lens-shaped frames are connected to the nose part holder by means of the protrusions, and
wherein the lower support is connected to the nose part holder by means of the sliding mechanical link.

5. Lens holder according to Claim 4, **characterized in that** the protrusions of the lens-shaped frames comprise multiple grooved joints or integrated racks.

6. Lens holder according to Claim 4, **characterized in that** the sliding mechanical link of the lower support has integrated racks.

7. Lens holder according to Claim 4, **characterized in that** the lower support comprises a bottom portion which can be mounted on a lower portion of a protective eyewear.

8. Lens holder according to Claim 4, **characterized in that** the nose holder has integrated racks which can be engaged with the integrated racks of the sliding mechanical link.

9. Lens holder according to Claim 7, **characterized in that** the bottom portion is in an arc shape to conform with a part of a protective eyewear on which the bottom portion is mounted.

10. Protective eyewear comprising a frame and a goggle lens supported by the frame **characterized in that** the protective eyewear comprises a lens holder according to any one of the preceding claims.

11. Protective eyewear according to Claim 10, **characterized in that** the protective eyewear is a goggle or a mask.

12. Protective eyewear according to Claim 10 or 11, **characterized in that** the protective eyewear comprises a fastening part.

13. Protective eyewear according to any one of Claims 10 to 12, **characterized in that** the upper support of lens holder comprises a fastening part which can be interlocked with the fastening part of the protective eyewear.

14. Protective eyewear according to any one of Claims 10 to 13, **characterized in that** the protective eyewear comprises a curving nose-piece part.

15. Protective eyewear according to any one of Claims 10 to 14, **characterized in that** the the lower support of the lens holder comprises a bottom part with an arc shape which can be mounted on the curving nose-piece part of the protective eyewear.
